# EUROPEAN PATENT SPECIFICATION

(11) **EP 3 244 688 B1**
(45) Date of publication and mention of the grant of the patent: **28.11.2018**
(21) Application number: 17170823.3
(22) Date of filing: 12.05.2017
(51) Int. Cl.: H04W 76/15, H04W 68/00, H04W 76/27

(54) **ENHANCED SIGNALING FOR COMMUNICATING DEVICE AND NETWORK**
VERBESSERTE SIGNALISIERUNG FÜR KOMMUNIZIERENDE VORRICHTUNG UND NETZWERK
SIGNALISATION AMÉLIORÉ POUR DISPOSITIF ET RÉSEAU COMMUNICANT

(30) Priority: 13.05.2016 US 201662335707 P; 16.05.2016 US 201662337304 P
(43) Date of publication of application: 15.11.2017
(73) Proprietor: HTC Corporation, Taoyuan City 330 (TW)
(72) Inventor: WU, Chih-Hsiang, 330, Taoyuan District, Taoyuan City (TW); TIWARI, Kundan, 330, Taoyuan District, Taoyuan City (TW)
(74) Representative: Carstens, Dirk Wilhelm

(56) References cited:
- "3rd Generation Partnership Project; Technical Specification Group Core Network and Terminals; Non-Access-Stratum (NAS) protocol for Evolved Packet System (EPS); Stage 3 (Release 13)", 3GPP STANDARD; 3GPP TS 24.301, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V13.5.0, 18 March 2016 (2016-03-18), pages 1-414, XP051088177, [retrieved on 2016-03-18]

## Description

### Background of the Invention

### 1. Field of the Invention

The present invention relates to a communication device and a network used in a wireless communication system, and more particularly, to a communication device adapted for communicating with a network in a wireless communication system, a network adapted for communicating with a plurality of communication devices in a wireless communication system, and a network adapted for communicating with a communication device in a wireless communication system.

### 2. Description of the Prior Art

A user equipment (UE) establishes a plurality of bearer contexts with a network. The network needs to configure a plurality of bearers for all of the plurality of bearer contexts for the UE, when the UE transmits a Service Request message to the network. However, it is unnecessary to configure the plurality of bearers for all of the plurality of bearer contexts, if the UE intends to transmit data associated with only a bearer context of the plurality of bearer contexts. Accordingly, communication between the UE and the network cannot be performed efficiently.

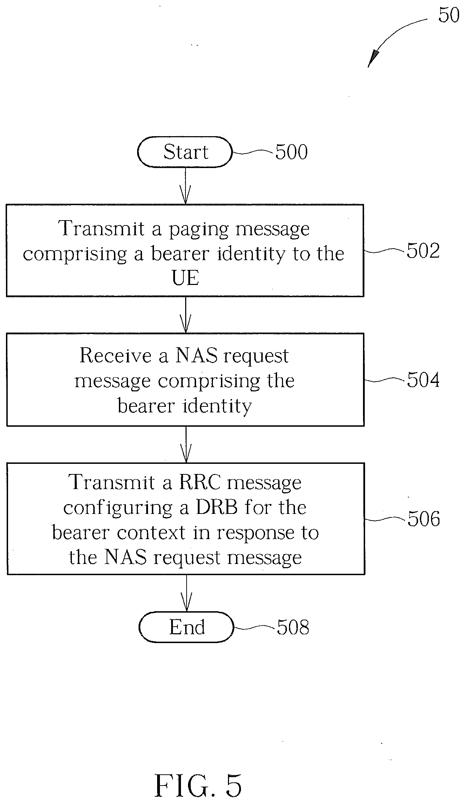

With regard to the available prior art, attention is drawn to "3rd Generation Partnership Project; Technical Specification Group Core Network and Terminals; Non-Access-Stratum (NAS) protocol for Evolved Packet System (EPS) ; Stage 3 (Release 13)", 3GPP STANDARD; 3GPP TS 24.301, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, March 18, 2016, CT WG1, V13.5.0, pages 1 - 414, see in particular Section 5.6.1.1, 1. 6-7, 13, 16-19, 22; Section 5.6.2-5.6.14; Section 6.5-6.5.1.3; Section 6.5.3-6.5.3.3; Section 8.2.25, 9.1; and figure 5.6.1.1.1.

Thus, how to communicate with the network efficiently is an important problem to be solved.

### Summary of the Invention

The present invention therefore provides a communication device adapted for communicating with a network in a wireless communication system as set forth in claim 1, a network adapted for communicating with a plurality of communication devices in a wireless communication system as set forth in claim 9, and a network adapted for communicating with a communication device in a wireless communication system as set forth in claim 13, to solve the abovementioned problem.
These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of a process according to an example of the present invention.
Fig. 5 is a flowchart of a process according to an example of the present invention.

### Detailed Description

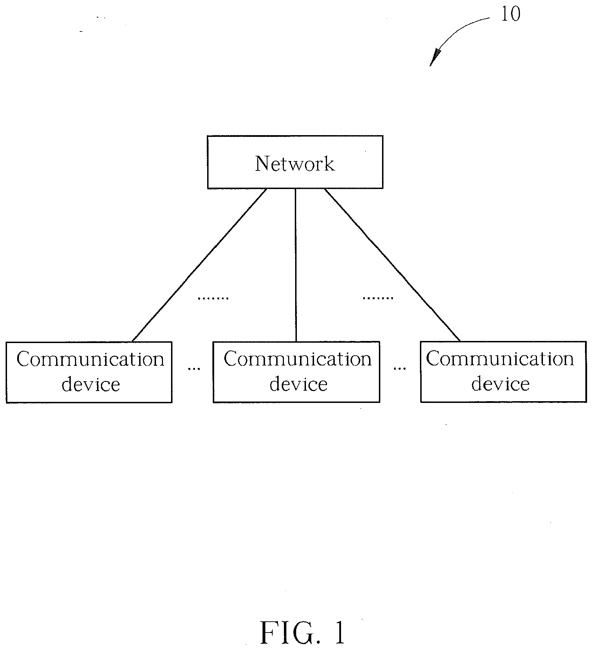

Fig. 1 is a schematic diagram of a wireless communication system 10 according to an example of the present invention. The wireless communication system 10 is briefly composed of a network and a plurality of communication devices. In Fig. 1, the network and the communication devices are simply utilized for illustrating the structure of the wireless communication system 10. Practically, the network may be an evolved UTRAN (E-UTRAN) including at least one evolved NB (eNB) or a fifth generation (5G) RAN including at least one 5G base station. Further, the network may also include both the E-UTRAN/5G RAN and a core network (CN), wherein the CN includes network entities such as a Mobility Management Entity (MME), a Serving Gateway (S-GW), a Packet Data Network (PDN) Gateway (P-GW), 5G MME and/or 5G S-GW, etc.

The communication device may be a user equipment (UE), a mobile phone, a laptop, a tablet computer, an electronic book, a portable computer system, a vehicle or an aircraft. For an uplink (UL), the communication device is the transmitter and the network is the receiver, and for a downlink (DL), the network is the transmitter and the communication device is the receiver.

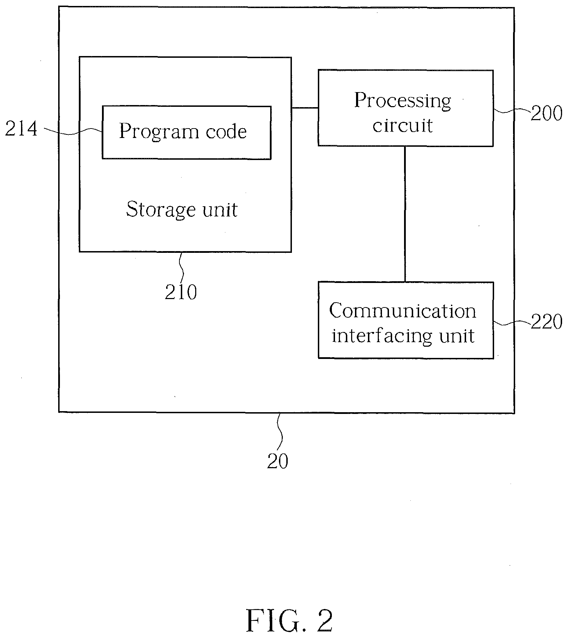

Fig. 2 is a schematic diagram of a .communication device 20 according to an example of the present invention. The communication device 20 may be the communication device or the network shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that stores a program code 214, accessed and executed by the processing circuit 200. Examples of the storage unit 210 include but are not limited to a read-only memory (ROM), flash memory, random-access memory (RAM), hard disk, optical data storage device, non-volatile storage unit, non-transitory computer-readable medium (e.g., tangible media), etc. The communication interfacing unit 220 includes a transceiver used to transmit and receive signals (e.g., data, signals, messages and/or packets) according to processing results of the processing circuit 200.

In the following diagrams and examples, a UE is used for representing the communication device in Fig. 1, to simplify the illustration of the examples.

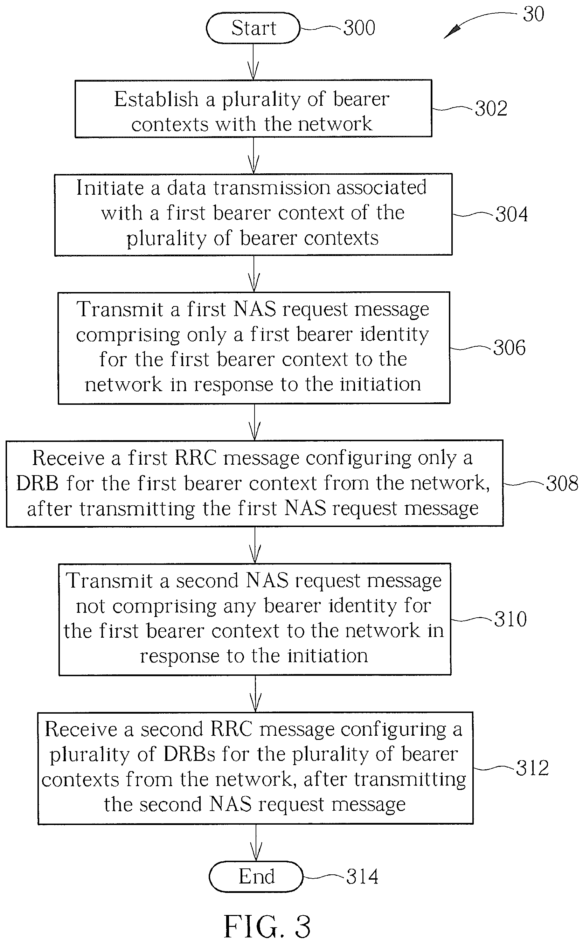

Fig. 3 is a flowchart of a process 30 according to an example of the present invention. The process 30 is utilized in a UE (e.g., the communication device in Fig. 1), to communicate with a network (e.g., the network in Fig. 1) . The process 30 includes the following steps:

| | |
|---|---|
| Step 300: | Start. |
| Step 302: | Establish a plurality of bearer contexts with the network. |
| Step 304: | Initiate a data transmission associated with a first bearer context of the plurality of bearer contexts. |
| Step 306: | Transmit a first Non Access stratum (NAS) request message comprising only a first bearer identity for the first bearer context to the network in response to the initiation. |
| Step 308: | Receive a first radio resource control (RRC) message configuring only a data radio bearer (DRB) for the first bearer context from the network, after transmitting the first NAS request message. |
| Step 310: | Transmit a second NAS request message not comprising any bearer identity for the first bearer context to the network in response to the initiation. |
| Step 312: | Receive a second RRC message configuring a plurality of DRBs for the plurality of bearer contexts from the network, after transmitting the second NAS request message. |
| Step 314: | End. |

According to the process 30, the UE establishes a plurality of bearer contexts with the network, and initiates a data transmission associated with a first bearer context of the plurality of bearer contexts. Then, the UE transmits a first NAS request message including only a first bearer identity for the first bearer context to the network in response to the initiation, and receives a first RRC message configuring only a DRB for the first bearer context from the network after transmitting the first NAS request message. Further, the UE transmits a second NAS request message not including any bearer identity for the first bearer context to the network in response to the initiation, and receives a second RRC message configuring a plurality of DRBs for the plurality of bearer contexts from the network after transmitting the second NAS request message. That is, the UE indicates to the network that the first bearer context identified by the first bearer identity has UL data pending for transmission. Accordingly, the network configures only one DRB for the first bearer context. Thus, communication between the UE and the network is performed efficiently.

Realization of the process 30 is not limited to the above description. The following examples may be applied for realizing the process 30.

In one example, the UE transmits the first NAS request message to the network in response to the initiation, when the UE has UL data pending for transmission and associated to the first bearer context only. The UE transmits the second NAS request message to the network in response to the initiation, when the UE has UL data pending for transmission and associated to the first bearer context and a second bearer context of the plurality of bearer contexts.

In one example, the UE transmits the first NAS request message including the first bearer identity for the first bearer context to the network in response to the initiation, when the network supports a Cellular Internet of Thing (CIoT) optimization. In one example, the UE transmits the second NAS request message not including any bearer identity for the first bearer context to the network in response to the initiation, when the network does not support the CIoT optimization. That is, the UE determines whether to transmit the bearer identity according to whether the network supports the CIoT optimization.

In one example, the UE determines that the network supports the CIoT optimization, when the UE receives a NAS message (e.g., "Attach Accept" or "Tracking Area Update Accept") indicating a support of the CIoT optimization. In one example, the UE determines that the network supports the CIoT optimization, when the UE receives a broadcast message (e.g., system information) indicating a support of the CIoT optimization.

In one example, the CIoT optimization includes a Control Plane (CP) CIoT optimization, a User Plane (UP) CIoT optimization or an attach without PDN connection establishment. In one example, the CIoT optimization includes a transmission request for pending a data transmission associated with a bearer context of the plurality of bearer contexts. That is, the network can handle (e.g., support) the first NAS request message. The network may transmit "transmission request for pending data of a bearer context" in a broadcast message (e.g., system information) or in a NAS message (e.g., "Attach Accept" or "Tracking Area Update Accept").

In one example, the UE establishes the plurality of bearer contexts with the network by transmitting at least one PDN Connectivity Request message and/or at least one Bearer Resource Allocation Request message to the network. In one example, the network transmits at least one "ACTIVATE DEFAULT EPS BEARER CONTEXT REQUEST" message to the UE in response to the at least one PDN Connectivity Request message, and transmits at least one "ACTIVATE DEDICATED EPS BEARER CONTEXT REQUEST" message to the UE in response to the at least one Bearer Resource Allocation Request message.

In one example of Step 308, the first RRC message may not configure another DRB for a second bearer context of the plurality of bearer contexts. In one example, the UE may not deactivate (e.g., locally) any bearer context of the plurality of bearer contexts, which does not have a DRB established when a first NAS request procedure initiated by a transmission of the first NAS request message is completed (e.g., successfully).

In one example, the UE transmits a third NAS request message to the network, when receiving a paging message. The third NAS request message may not include any bearer identity indicating data pending for transmission. In one example, the UE may not deactivate (e.g., locally) any bearer context of the plurality of bearer contexts, which does not have a DRB established when a third NAS request procedure initiated by a transmission of the third NAS request message is completed (e.g., successfully).

In one example, the UE transmits the second NAS request message not including any bearer identity for the first bearer context to the network in response to the initiation, when the network supports the CIoT optimization (e.g., when the UE intends the network to configure the plurality of DRBs for all of the plurality of bearer contexts identified by a plurality of bearer identities). In one example, the UE deactivates (e.g., locally) at least one bearer context of the plurality of bearer contexts, which does not have a DRB established when a second NAS request procedure initiated by a transmission of the second NAS request message is completed (e.g., successfully).

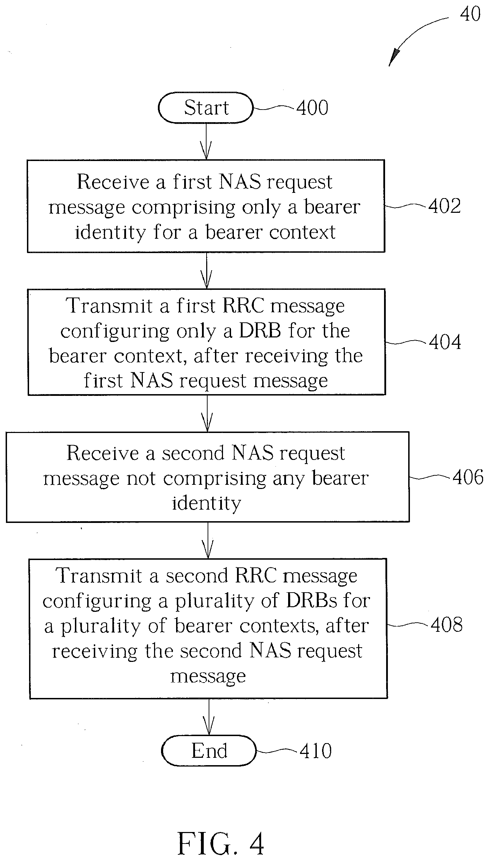

Fig. 4 is a flowchart of a process 40 according to an example of the present invention. The process 40 is utilized in a network (e.g., the network in Fig. 1), to communicate with a plurality of UEs (e.g., the communication devices in Fig. 1). The process 40 includes the following steps:

| | |
|---|---|
| Step 400: | Start. |
| Step 402: | Receive a first NAS request message comprising only a bearer identity for a bearer context. |
| Step 404: | Transmit a first RRC message configuring only a DRB for the bearer context, after receiving the first NAS request message. |
| Step 406: | Receive a second NAS request message not comprising any bearer identity. |
| Step 408: | Transmit a second RRC message configuring a plurality of DRBs for a plurality of bearer contexts, after receiving the second NAS request message. |
| Step 410: | End. |

According to the process 40, the network receives a first NAS request message including only a bearer identity for a bearer context, and transmits a first RRC message configuring only a DRB for the bearer context after receiving (e.g., in response to) the first NAS request message. Then, the network receives a second NAS request message not including any bearer identity, and transmits a second RRC message configuring a plurality of DRBs for a plurality of bearer contexts after receiving (e.g. in response to) the second NAS request message. That is, the network is indicated by the UE that the bearer context identified by the bearer identity has UL data pending for transmission. Accordingly, the network configures only one DRB for the bearer context. Thus, communication between the UE and the network is performed efficiently.

Realization of the process 40 is not limited to the above description. The following examples may be applied for realizing the process 40.

In one example, the network supports the CIoT optimization and indicates a support of the CIoT optimization (e.g. , in a NAS message or a broadcast message) as described in process 30 and related examples.

In one example, the network receives the first NAS request message and the second NAS request message from a first UE of the plurality of UEs. The network establishes a plurality of bearer contexts with the first UE, and the first bearer context is one of the plurality of bearer contexts. The first UE may transmit the first NAS request message to initiate a data transmission associated with the first bearer context of the plurality of bearer contexts. The first UE may transmit the second NAS request message to initiate a data transmission associated with the plurality of bearer contexts . The network may transmit the first RRC message and the second RRC message to the first UE.

In one example, the network receives the first NAS request message from a first UE of the plurality of UEs, and transmits the first RRC message to the first UE. The network receives the second NAS request message from a second UE of the plurality of UEs, and transmits the second RRC message to the second UE. The network establishes a first plurality of bearer contexts with the first UE. The network establishes a second plurality of bearer contexts with the second UE. The first UE may support the CIoT optimization, and may transmit the first NAS request message to initiate a data transmission associated with the first bearer context of the first plurality of bearer contexts. The network transmits the first RRC message to the first UE in response to the first NAS request message. In one example, the second UE supports the CIoT optimization, and transmits the second NAS request message to initiate data transmission associated with the second plurality of bearer contexts. In another example, the second UE may not support the CIoT optimization, and transmits the second NAS request message to initiate the data transmission associated with the second plurality of bearer contexts. The second plurality of bearer contexts may include all of bearer contexts established by the second UE with the network. The network transmits the second RRC message to the second UE in response to the second NAS request message.

In one example of the processes above, the first NAS request message is a Service Request message, an Extended Service Request message or a Data Service Request message, the second NAS request message is a Service Request message, and the third NAS request message is an Extended Service Request message, a Data Service Request message or a Service Request message.

In one example of the processes above, the first RRC message and the second RRC message are RRC Connection Reconfiguration messages. The UE transmits a RRC Connection Reconfiguration Complete message to the network in response to a RRC Connection Reconfiguration message . The first RRC message may include the first bearer identity. The second RRC message may include a plurality of bearer identities for the (or second) plurality of bearer contexts. The (or second) plurality of bearer contexts may include all of the (or second) plurality of bearer contexts established by the first/second UE with the network.

Fig. 5 is a flowchart of a process 50 according to an example of the present invention. The process 50 is utilized in a network (e.g., the network in Fig. 1), to communicate with a UE (e.g., the communication device in Fig. 1). The process 50 includes the following steps:

| | |
|---|---|
| Step 500: | Start. |
| Step 502: | Transmit a paging message comprising a bearer identity to the UE. |
| Step 504: | Receive a NAS request message comprising the bearer identity. |
| Step 506: | Transmit a RRC message configuring a DRB for the bearer context in response to the NAS request message. |
| Step 508: | End. |

According to the process 50, the network pages the UE with a bearer identity for a bearer context established between the UE and network. When the UE receives the bearer identity, the UE obtains that the network intends to transmit data associated with the bearer context to the UE and transmits the NAS request message including the bearer identity to the network. The network transmits a RRC message configuring a DRB for the bearer context in response to the NAS request message. Thus, when the network receives the NAS request message from the UE, both the network and the UE communicate with each other operated according to the processes 30 and/or 40.

In one example of the processes above, the bearer identity is an Evolved Packet System (EPS) bearer identity and the bearer context is an EPS bearer context. In another example, the bearer identity is a 5G bearer identity and the bearer context is a 5G bearer context.

It should be noted that although the above examples are illustrated to clarify the related operations of corresponding processes. The examples can be combined and/or modified arbitrarily according to system requirements and/or design considerations.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means be the communication device 20. Any of the abovementioned processes may be compiled into the program code 214.

To sum up, the present invention provides a communication device adapted for communicating with a network. Accordingly, the network configures only one DRB for the bearer context identified by the bearer identity indicated by the UE. Thus, communication between the UE and the network is performed efficiently.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A communication device (20) adapted for communicating with a network in a wireless communication system, comprising:
a storage unit (210) for storing instructions of:
establishing (302) a plurality of bearer contexts with the network;
initiating (304) a data transmission associated with a first bearer context of the plurality of bearer contexts;
transmitting (306) a first Non Access stratum, NAS, request message comprising only one first bearer identity for the first bearer context to the network in response to the initiation when the network supports a Cellular Internet of Thing, CIoT, optimization;
receiving (308) a first radio resource control, RRC, message configuring only one data radio bearer, DRB, for the first bearer context from the network, after transmitting the first NAS request message;
transmitting (310) a second NAS request message not comprising any bearer identity for the first bearer context to the network in response to the initiation when the network does not support the CIoT optimization; and
receiving (312) a second RRC message configuring a plurality of DRBs for the plurality of bearer contexts from the network, after transmitting the second NAS request message; and
a processing circuit (200), coupled to the storage unit (210), configured to execute the instructions stored in the storage unit (210).

2. The communication device of claim 1, wherein the communication device determines that the network supports the CIoT optimization, when the communication device receives a NAS message indicating a support of the CIoT optimization or receives a broadcast message indicating a support of the CIoT optimization.

3. The communication device of claim 1, wherein the CIoT optimization comprises a Control Plane, CP, CIoT optimization, a User Plane, UP, CIoT optimization or an attach without Packet Data Network, PDN, connection establishment.

4. The communication device of claim 1, wherein the instruction of establishing the plurality of bearer contexts with the network comprises:
transmitting at least one PDN Connectivity Request message and at least one Bearer Resource Allocation Request message to the network.

5. The communication device of claim 1, wherein the first RRC message does not configure another DRB for a second bearer context of the plurality of bearer contexts.

6. The communication device of claim 1, wherein the storage unit (210) further stores the instruction of:
not deactivating any bearer context of the plurality of bearer contexts, which does not have a DRB established when a first NAS request procedure initiated by a transmission of the first NAS request message is completed; and
deactivating at least one bearer context of the plurality of bearer contexts, which does not have the DRB established when a second NAS request procedure initiated by a transmission of the second NAS request message is completed.

7. The communication device of claim 1, wherein the first NAS request message is a Service Request message, an Extended Service Request message or a Data Service Request message, the second NAS request message is the Service Request message, and the first RRC message and the second RRC message are RRC Connection Reconfiguration messages.

8. The communication device of claim 1, wherein the communication device (20) transmits the first NAS request message to the network in response to the initiation, when the UE has UL data pending for transmission and associated to the first bearer context only; and the communication device transmits the second NAS request message to the network in response to the initiation, when the UE has UL data pending for transmission and associated to the first bearer context and a second bearer context of the plurality of bearer contexts.

9. A network (20) adapted for communicating with a plurality of communication devices in a wireless communication system, comprising:
a storage unit (210) for storing instructions of:
receiving (402) a first Non Access stratum, NAS, request message comprising only one bearer identity for a bearer context;
transmitting (404) a first radio resource control, RRC, message configuring only one data radio bearer, DRB, for the bearer context, after receiving the first NAS request message;
receiving (406) a second NAS request message not comprising any bearer identity; and
transmitting (408) a second RRC message configuring a plurality of DRBs for a plurality of bearer contexts, after receiving the second NAS request message; and
a processing circuit (200), coupled to the storage unit (210), configured to execute the instructions stored in the storage unit (210).

10. The network of claim 9, wherein the network receives the first NAS request message and the second NAS request message from a first communication device of the plurality of communication devices, and transmits the first RRC message and the second RRC message to the first communication device.

11. The network of claim 9, wherein the network receives the first NAS request message from a first communication device of the plurality of communication devices and transmits the first RRC message to the first communication device in response to the first NAS request message, and receives the second NAS request message from a second communication device of the plurality of communication devices and transmits the second RRC message to the second communication device in response to the second NAS request message.

12. The network of claim 9, wherein the first NAS request message is a Service Request message, an Extended Service Request message or a Data Service Request message, the second NAS request message is the Service Request message, and the first RRC message and the second RRC message are RRC Connection Reconfiguration messages.

13. A network (20) adapted for communicating with a communication device in a wireless communication system, comprising:
a storage unit (210) for storing instructions of:
transmitting (502) a paging message comprising only one bearer identity to the communication device;
receiving (504) a Non Access stratum, NAS, request message comprising the bearer identity; and
transmitting (506) a radio resource control, RRC, message configuring only one data radio bearer, DRB, for the bearer context in response to the NAS request message; and
a processing circuit (200), coupled to the storage unit (210), configured to execute the instructions stored in the storage unit (210).

## Patentansprüche

1. Kommunikationseinrichtung (20), die ausgelegt ist, um mit einem Netzwerk in einem Drahtloskommunikationssystem zu kommunizieren, die Folgendes aufweist:
eine Speichereinheit (210) zum Speichern von Anweisungen zum:
Aufbauen (302) einer Vielzahl von Trägerkontexten mit dem Netzwerk;
Initiieren (304) einer Datenübertragung, die mit einem ersten Trägerkontext der Vielzahl von Trägerkontexten assoziiert ist;
Übertragen (306) einer ersten NAS-Anfragenachricht (NAS = Non Access Stratum), die nur eine erste Trägeridentität für den ersten Trägerkontext aufweist, an das Netzwerk, und zwar ansprechend auf die Initiierung, wenn das Netzwerk eine CloT-Optimierung (CloT = Cellular Internet of Things) unterstützt;
Empfangen (308) einer ersten Funkressourcensteuerungs- bzw. RRC-Nachricht (RRC = Radio Resource Control), die nur einen Datenfunkträger bzw. DRB (DRB = Data Radio Bearer) für den ersten Trägerkontext konfiguriert, von dem Netzwerk nach dem Übertragen der ersten NAS-Anfragenachricht;
Übertragen (310) einer zweiten NAS-Anfragenachricht, die keine Trägeridentität für den ersten Trägerkontext aufweist, an das Netzwerk, und zwar ansprechend auf die Initiierung, wenn das Netzwerk keine CloT-Optimierung unterstützt; und
Empfangen (312) einer zweiten RRC-Nachricht, die eine Vielzahl von DRBs für die Vielzahl der Trägerkontexte konfiguriert, von dem Netzwerk, nach dem Übertragen der zweiten NAS-Anfragenachricht; und
eine Verarbeitungsschaltung (200), die mit der Speichereinheit (210) gekoppelt ist, die konfiguriert ist, um die Anweisungen auszuführen, die in der Speichereinheit (210) gespeichert sind.

2. Kommunikationseinrichtung gemäß Anspruch 1, wobei die Kommunikationseinrichtung bestimmt, dass das Netzwerk die CloT-Optimierung unterstützt, wenn die Kommunikationseinrichtung eine NAS-Nachricht empfängt, die eine Unterstützung der CloT-Optimierung anzeigt, oder eine Übertragungs- bzw. Broadcast-Nachricht empfängt, die eine Unterstützung der CloT-Optimierung anzeigt.

3. Kommunikationseinrichtung gemäß Anspruch 1, wobei die CloT-Optimierung eine Steuerebenen- bzw. CP-CloT-Optimierung (CP = Control Plane), eine Nutzerebenen- bzw. UP-CloT-Optimierung (UP = User Plane) oder eine Verbindung ohne Paketdatennetzwerk- bzw. PDN-Verbindungsaufbau (PDN = Packet Data Network) aufweist.

4. Kommunikationseinrichtung gemäß Anspruch 1, wobei die Anweisung zum Aufbauen einer Vielzahl von Trägerkontexten mit dem Netzwerk Folgendes aufweist:
Übertragen von zumindest einer PDN-Konnektivitätsanfragenachricht und zumindest einer Trägerressourcenallokationsanfragenachricht an das Netzwerk.

5. Kommunikationseinrichtung gemäß Anspruch 1, wobei die erste RRC-Nachricht nicht einen weiteren DRB für einen zweiten Trägerkontext der Vielzahl von Trägerkontexten konfiguriert.

6. Kommunikationseinrichtung gemäß Anspruch 1, wobei die Speichereinheit (210) ferner die Anweisung speichert zum:
nicht Deaktivieren irgendeines Trägerkontextes der Vielzahl von Trägerkontexten, der keinen aufgebauten DRB aufweist, wenn eine erste NAS-Anfrageprozedur, die durch eine Übertragung der ersten NAS-Anfragenachricht initiiert wird, abgeschlossen ist; und
Deaktivieren von zumindest einem Trägerkontext der Vielzahl von Trägerkontexten, der keinen aufgebauten DRB aufweist, wenn eine zweite NAS-Anfrageprozedur, die durch eine Übertragung der zweiten NAS-Anfragenachricht initiiert wird, abgeschlossen ist.

7. Kommunikationseinrichtung gemäß Anspruch 1, wobei die erste NAS-Anfragenachricht eine Dienstanfrage- bzw. Service-Request-Nachricht, eine erweiterte Dienstanfrage- bzw. Extended-Service-Request-Nachricht oder eine Datendienstanfrage- bzw. Data-Service-Request-Nachricht ist, die zweite NAS-Anfragenachricht die Service-Request-Nachricht ist, und die erste RRC-Nachricht und die zweite RRC-Nachricht RRC-Verbindungsneukonfigurationsnachrichten sind.

8. Kommunikationseinrichtung gemäß Anspruch 1, wobei die Kommunikationseinrichtung (20) die erste NAS-Anfragenachricht an das Netzwerk ansprechend auf die Initiierung überträgt, wenn das UE Uplink- bzw. UL-Daten aufweist, die zur Übertragung anstehen und nur mit dem ersten Trägerkontext assoziiert sind; und die Kommunikationseinrichtung die zweite NAS-Anfragenachricht an das Netzwerk ansprechend auf die Initiierung sendet, wenn das UE UL-Daten aufweist, die zur Übertragung anstehen, und die mit dem ersten Trägerkontext und einem zweiten Trägerkontext der Vielzahl von Trägerkontexten assoziiert sind.

9. Netzwerk (20), das ausgelegt ist, um mit einer Vielzahl von Kommunikationseinrichtungen in einem Drahtloskommunikationssystem zu kommunizieren, das Folgendes aufweist:
eine Speichereinheit (210) zum Speichern von Anweisungen zum:
Empfangen (402) einer ersten NAS-Anfragenachricht, die nur eine Funkträgeridentität für einen Trägerkontext aufweist;
Übertragen (404) einer ersten Funkressourcensteuerungs- bzw. RRC-Nachricht, die nur einen Datenfunkträger bzw. DRB für den Trägerkontext konfiguriert, und zwar nach dem Empfangen der ersten NAS-Anfragenachricht;
Empfangen (406) einer zweiten NAS-Anfragenachricht, die irgendeine Trägeridentität aufweist; und
Übertragen (408) einer zweiten RRC-Nachricht, die eine Vielzahl von DRBs für eine Vielzahl von Trägerkontexten konfiguriert, nach dem Empfangen der zweiten NAS-Anfragenachricht; und
eine Verarbeitungsschaltung (200), die mit der Speichereinheit (210) gekoppelt ist, die konfiguriert ist, um die Anweisungen auszuführen, die in der Speichereinheit (210) gespeichert sind.

10. Netzwerk gemäß Anspruch 9, wobei das Netzwerk die erste NAS-Anfragenachricht und die zweite NAS-Anfragenachricht von einer ersten Kommunikationseinrichtung der Vielzahl von Kommunikationseinrichtungen empfängt, und die erste RRC-Nachricht und die zweite RRC-Nachricht an die erste Kommunikationseinrichtung überträgt.

11. Netzwerk gemäß Anspruch 9, wobei das Netzwerk die erste NAS-Anfragenachricht von einer ersten Kommunikationseinrichtung der Vielzahl von Kommunikationseinrichtungen empfängt und die erste RRC-Nachricht an die erste Kommunikationseinrichtung ansprechend auf die erste NAS-Anfragenachricht überträgt, und die zweite NAS-Anfragenachricht von einer zweiten Kommunikationseinrichtung der Vielzahl von Kommunikationseinrichtungen empfängt und die zweite RRC-Nachricht an die zweite Kommunikationseinrichtung ansprechend auf die zweite NAS-Anfragenachricht überträgt.

12. Netzwerk gemäß Anspruch 9, wobei die erste NAS-Anfragenachricht eine Dienstanfrage- bzw. Service-Request-Nachricht, eine erweitere Dienstanfrage- bzw. Extended-Service-Request-Nachricht ist, die zweite NAS-Anfragenachricht die Service-Request-Nachricht ist und die erste RRC-Nachricht und die zweite RRC-Nachricht RRC-Verbindungsneukonfigurations- bzw. RRC-Connection-Reconfiguration-Nachrichten sind.

13. Netzwerk (20), das ausgelegt ist, um mit einer Kommunikationseinrichtung in einem Drahtloskommunikationssystem zu kommunizieren, das Folgendes aufweist:
eine Speichereinheit (210) zum Speichern von Anweisungen zum:
Übertragen (502) einer Paging-Nachricht, die nur eine Funkträgeridentität aufweist, an die Kommunikationseinrichtung;
Empfangen (504) einer NAS-Anfragenachricht, die die Trägeridentität aufweist; und
Übertragen (506), einer Funkressourcensteuerungs- bzw. RRC-Nachricht, die nur einen Datenfunkträger bzw. DRB für den Trägerkontext konfiguriert, und zwar ansprechend auf die NAS-Anfragenachricht; und
eine Verarbeitungsschaltung (200), die mit der Speichereinheit (210) gekoppelt ist, die konfiguriert ist, um die Anweisungen auszuführen, die in der Speichereinheit (210) gespeichert sind.

## Revendications

1. Dispositif de communication (20) adapté à communiquer avec un réseau dans un système de communication sans fil, comprenant :
une unité de stockage (210) pour stocker des instructions consistant à :
établir (302) une pluralité de contextes de support avec le réseau ;
initier (304) une transmission de données associée à un premier contexte de support de la pluralité de contextes de support ;
transmettre (306) au réseau, en réponse à l'initiation, un premier message de requête de strate de non accès, NAS, comprenant uniquement une première identité de support pour le premier contexte de support, lorsque le réseau prend en charge une optimisation Internet des objets cellulaire, CIoT ;
recevoir (308) du réseau un premier message de contrôle de ressources radio, RRC, configurant uniquement un support de données radio, DRB, pour le premier contexte de support, après avoir transmis le premier message de requête NAS ;
transmettre (310) au réseau, en réponse à l'initiation, un second message de requête NAS ne comprenant aucune identité de support pour le premier contexte de support, lorsque le réseau ne prend pas en charge l'optimisation CIoT ; et
recevoir (312) du réseau un second message RRC configurant une pluralité de DRB pour la pluralité de contextes de support, après avoir transmis le second message de requête NAS ; et
un circuit de traitement (200), couplé à l'unité de stockage (210), configuré pour exécuter les instructions stockées dans l'unité de stockage (210).

2. Dispositif de communication selon la revendication 1, dans lequel le dispositif de communication détermine que le réseau prend en charge l'optimisation CIoT lorsque le dispositif de communication reçoit un message NAS indiquant une prise en charge de l'optimisation CIoT ou reçoit un message de diffusion indiquant une prise en charge de l'optimisation CIoT.

3. Dispositif de communication selon la revendication 1, dans lequel l'optimisation CIoT comprend une optimisation CIoT de plan de contrôle, CP, une optimisation CIoT de plan utilisateur, UP, ou un attachement sans établissement de connexion par réseau de données par paquet, PDN.

4. Dispositif de communication selon la revendication 1, dans lequel l'instruction d'établissement de la pluralité de contextes de support avec le réseau comprend :
la transmission au réseau d'au moins un message de requête de connectivité PDN et d'au moins un message de requête d'allocation de ressources de support.

5. Dispositif de communication selon la revendication 1, dans lequel le premier message RRC ne configure pas un autre DRB pour un second contexte de support de la pluralité de contextes de support.

6. Dispositif de communication selon la revendication 1, dans lequel l'unité de stockage (210) stocke en outre l'instruction consistant à :
ne désactiver aucun contexte de support de la pluralité de contextes de support, qui ne possède pas de DRB établi lorsqu'une première procédure de requête NAS, initiée par une transmission du premier message de requête NAS, est terminée ; et
désactiver au moins un contexte de support de la pluralité de contextes de support, qui ne possède pas de DRB établi lorsqu'une seconde procédure de requête NAS, initiée par une transmission du second message de requête NAS, est terminée.

7. Dispositif de communication selon la revendication 1, dans lequel le premier message de requête NAS est un message de requête de service, un message de requête de service étendu ou un message de requête de service de données, le second message de requête NAS est le message de requête de service et le premier message RRC et le second message RRC sont des messages de reconfiguration de connexion RRC.

8. Dispositif de communication selon la revendication 1, dans lequel le dispositif de communication (20) transmet le premier message de requête NAS au réseau en réponse à l'initiation, lorsque l'UE a des données UL en attente de transmission qui sont associées au premier contexte de support uniquement ; et le dispositif de communication transmet le second message de requête NAS au réseau en réponse à l'initialisation, lorsque l'UE a des données UL en attente de transmission qui sont associées au premier contexte de support et à un second contexte porteur de la pluralité de contextes de support.

9. Réseau (20) adapté à communiquer avec une pluralité de dispositifs de communication dans un système de communication sans fil, comprenant :
une unité de stockage (210) pour stocker des instructions de :
recevoir (402) un premier message de requête de strate de non accès (NAS) comprenant uniquement une identité de support pour un contexte de support ;
transmettre (404) un premier message de contrôle de ressources radio, RRC, configurant uniquement un support de données radio, DRB, pour le contexte de support, après avoir reçu le premier message de requête NAS ;
recevoir (406) un second message de requête NAS ne comprenant aucune identité de support ; et
émettre (408) un second message RRC configurant une pluralité de DRB pour une pluralité de contextes de support, après avoir reçu le second message de requête NAS ; et
un circuit de traitement (200), couplé à l'unité de stockage (210), configuré pour exécuter les instructions stockées dans l'unité de stockage (210).

10. Réseau selon la revendication 9, dans lequel le réseau reçoit le premier message de requête NAS et le second message de requête NAS d'un premier dispositif de communication de la pluralité de dispositifs de communication et transmet le premier message RRC et le second message RRC au premier dispositif de communication.

11. Réseau selon la revendication 9, dans lequel le réseau reçoit le premier message de requête NAS d'un premier dispositif de communication de la pluralité de dispositifs de communication et transmet le premier message RRC au premier dispositif de communication en réponse au premier message de requête NAS, et reçoit le second message de requête NAS d'un second dispositif de communication de la pluralité de dispositifs de communication et transmet le second message RRC au second dispositif de communication en réponse au second message de requête NAS.

12. Réseau selon la revendication 9, dans lequel le premier message de requête NAS est un message de requête de service, un message de requête de service étendu ou un message de requête de service de données, le second message de requête NAS est le message de requête de service, et le premier message RRC et le second message RRC sont des messages de reconfiguration de connexion RRC.

13. Réseau (20) adapté à communiquer avec un dispositif de communication dans un système de communication sans fil, comprenant :
une unité de stockage (210) pour stocker des instructions de :
transmettre (502), au dispositif de communication, un message de recherche comprenant une seule identité de support ;
recevoir (504) un message de requête de strate de non accès, NAS, comprenant l'identité de support ; et
transmettre (506) un message de contrôle de ressources radio, RRC, configurant uniquement un support radio de données, DRB, pour le contexte de support en réponse au message de requête NAS ; et
un circuit de traitement (200), couplé à l'unité de stockage (210), configuré pour exécuter les instructions stockées dans l'unité de stockage (210).
